# EUROPÄISCHE PATENTSCHRIFT

(11) **EP 1 925 062 B1**
(45) Veröffentlichungstag und Bekanntmachung des Hinweises auf die Patenterteilung: **26.08.2009**
(21) Anmeldenummer: 06764172.0
(22) Anmeldetag: 14.07.2006
(51) Int. Cl.: H02J 3/38, H02J 3/06

(54) **VORRICHTUNG UND VERFAHREN ZUR DEZENTRALEN ENERGIEVERSORGUNG**
DECENTRALIZED POWER SUPPLY DEVICE AND METHOD
DISPOSITIF ET PROCEDE POUR ALIMENTATION DECENTRALISEE EN ENERGIE

(30) Priorität: 14.09.2005 DE 102005043883
(43) Veröffentlichungstag der Anmeldung: 28.05.2008
(73) Patentinhaber: SIEMENS AKTIENGESELLSCHAFT ÖSTERREICH, 1210 Wien (AT)
(72) Erfinder: HÖRIST, Gerald, A-1220 Wien (AT)
(86) Internationale Anmeldenummer: PCT/EP2006/064254
(87) Internationale Veröffentlichungsnummer: WO 2007/031357

(56) Entgegenhaltungen:
- EP-A- 1 408 594
- WO-A-20/05027300
- US-A- 5 627 737
- US-A1- 2005 006 958

## Beschreibung

Die Erfindung betrifft eine Vorrichtung zur dezentralen Energieversorgung, welche Mittel zur Einspeisung von elektrischer Energie einer insbesondere regenerativen Stromquelle in ein Stromnetz und Schutzeinrichtungen umfasst, wobei die Stromquelle mit einer Steuerung verbunden ist, mittels welcher die Anschaltung zumindest eines Teils der Schutzeinrichtungen an das Stromnetz erfolgt. Des Weiteren betrifft die Erfindung ein Verfahren zum Betreiben der Vorrichtung.

Dezentrale Energieversorgungen zeichnen sich dadurch aus, dass eine Vielzahl von Stromquellen elektrische Energie in ein gemeinsames Stromnetz liefert, aus dem wiederum viele Verbraucher versorgt werden. Typischerweise handelt es sich dabei um alternative Stromquellen wie Photovoltaikanlagen, Windkraftanlagen oder Brennstoffzellen. In der Regel können derartige Stromquellen nicht direkt an ein Netz angebunden werden. Zwischen Stromquelle und Netzanschluss sind Vorrichtungen erforderlich, die die zur Verfügung stehende elektrische Energie synchron zum Stromnetz einspeisen, wie beispielsweise ein in der EP 1 408 594 A2 offenbarter Wechselrichter mit vorgeschaltetem Hochsetzer.

Für die Einspeisung in öffentliche Stromnetze sind zur Vermeidung von Verzerrungen und Inselbildungen spezielle Vorgaben einzuhalten; beispielsweise in Deutschland durch die Richtlinie VDE 0126 für Netzschnittstellen spezifiziert. Spannungs- und Frequenzgrenzen, bei denen eine Anlage abgeschaltet werden muss, sowie regelmäßige Überprüfungen dieser Abschalteinrichtungen sind hier festgelegt. Eine weitere Forderung ist die Sicherheit gegen unbeabsichtigten Inselbetrieb, bei dem in einem vom Verbundnetz getrennten Teilnetz dezentrale Stromerzeugungsanlagen den Verbrauch der angeschlossenen Lasten decken. Ursachen von Trennungen können z.B. Schalthandlungen des Netzbetreibers, Auslösen von Schutzeinrichtungen oder Ausfälle von Betriebsmittel sein. Bei einem unbeabsichtigten Inselnetzbetrieb vollzieht sich dieser Vorgang außerhalb der Kontrolle des Netzbetreibers, der damit Spannung und Frequenz des getrennten Teilnetzes nicht mehr beeinflussen kann. Sicherheit gegen diese Inselnetzbildung bietet beispielsweise eine in der DIN VDE 0126 definierte selbsttätige Freischaltstelle, die neben Spannung und Frequenz auch die Impedanz am Netzanschlusspunkt überwacht. Eine Trennung des Teilnetzes vom Rest des Netzes führt zu einem Impedanzsprung, der als Kriterium für eine Abschaltung der dezentralen Einspeiser dient.

Nach dem Stand der Technik umfasst eine Vorrichtung, mit der eine dezentrale Stromquelle an ein Versorgungsnetz angeschlossen wird, demnach Schutzeinrichtungen, die zwischen den Netzanschlusspunkt und den eigentlichen Mitteln zur Einspeisung, beispielsweise einem Wechselrichter, angeordnet sind. Diese Schutzeinrichtungen überwachen laufend die Spannung, die Frequenz und die Impedanz, um einerseits die Anlage im Bedarfsfall frei zu schalten und andererseits die Regelvorgaben für die synchrone Einspeisung zu liefern. Ein Verfahren, bei dem die Spannung an einem Netzanschlusspunkt überwacht wird, ist beispielsweise aus der WO 2005/027300 Al bekannt.

In der Regel liefern dezentrale Stromquellen nicht kontinuierlich elektrische Energie, da diese beispielsweise von der Sonneneinstrahlung bei Photovoltaikanlagen oder den Luftströmungen bei Windkraftanlagen abhängig ist. Fällt das Energieaufkommen unter einen Schwellwert, wird die Anlage frei geschaltet. Die direkt am Netzanschlusspunkt anliegenden Schutzeinrichtungen nehmen dabei über die vorhandenen Messwiderstände weiterhin Energie aus dem Versorgungsnetz auf, wodurch bei längeren Freischaltzeiten der Gesamtwirkungsgrad der Anlage negativ beeinflusst wird. Eine derartige Steuerung ist beispielsweise in der US 5,627,737 Al angegeben.

Oft umfassen die Mittel zur Einspeisung auch Hilfsversorgungen, die direkt an das Stromnetz angeschlossen sind und beispielsweise bei Wechselrichtern eine Steuerung der Schaltelemente versorgen. Auch diese Hilfsversorgungen nehmen im frei geschalteten Zustand der Anlage eine Restenergie auf und senken damit den Gesamtwirkungsgrad.

Der Erfindung liegt die Aufgabe zu Grunde, für eine Vorrichtung der eingangs genannten Art eine Verbesserung des Gesamtwirkungsgrades herbeizuführen.

Erfindungsgemäß geschieht dies durch eine Vorrichtung zur dezentralen Energieversorgung, welche Mittel zur Einspeisung von elektrischer Energie einer insbesondere regenerativen Stromquelle in ein Stromnetz und Schutzeinrichtungen umfasst, wobei die Stromquelle mit einer Steuerung verbunden ist, mittels welcher die Anschaltung zumindest eines Teils der Schutzeinrichtungen an das Energienetz erfolgt. Durch diese gesteuerte Anschaltung der Schutzeinrichtungen ist eine Trennung der Schutzeinrichtungen vom Stromnetz möglich, wodurch die Energieaufnahme der Schutzeinrichtungen vermindert und damit der Gesamtwirkungsgrad gesteigert wird. Dabei erfolgt die Anschaltung der Schutzeinrichtungen an das Stromnetz abhängig von der aus der Stromquelle zur Verfügung stehenden Energie nur dann, wenn die Stromquelle auch genug elektrische Energie zur Einspeisung liefert. Damit ist auf einfache Weise ein Kriterium für die Steuerung der Anschaltung der Schutzeinrichtungen gegeben.

In einer vorteilhaften Ausprägung, bei der die Mittel zur Einspeisung zumindest auch eine Hilfsversorgung umfassen, ist diese Hilfsversorgung ebenso mittels der Steuerung an das Stromnetz angeschaltet. Damit ist auch eine Trennung der Hilfsversorgung vom Stromnetz möglich, so dass diese keine Energie mehr aufnimmt.

Von Vorteil ist es, wenn auch die Anschaltung der Hilfsversorgung an das Stromnetz abhängig von der aus der Stromquelle zur Verfügung stehenden Energie erfolgt. Damit ist auf einfache Weise ein Kriterium für die Steuerung der Anschaltung der Hilfsversorgung gegeben.

Eine vorteilhafte Ausprägung der Erfindung sieht als Stromquelle ein photovoltaisches Element vor, da ein solches naturgemäß mehrere Stunden pro Tag keine elektrische Energie liefert.

Für die Ausführung der Erfindung ist es zudem vorteilhaft, wenn die Anschaltung der Schutzeinrichtungen bzw. der

Hilfsversorgung an das Stromnetz mittels eines Schalters erfolgt, der als mechanischer Kontakt ausgebildet ist. Derartige Schalter sind billig und bewirken eine vollständige Trennung zur Verhinderung von Leckströmen.

Bei Anforderungen an eine kleine Bauweise ist es aber auch günstig, für die Anschaltung der Schutzeinrichtungen bzw. der Hilfsversorgung an das Stromnetz einen Schalters vorzusehen, der als Halbleiterelement ausgebildet ist.

Die Vorrichtung wird in der Weise betrieben, dass der Schalter eingeschaltet wird, wenn die Spannung der Stromquelle für eine vorgegebene Zeit einen vorgegebenen Einschaltwert überschreitet und dass der Schalter ausgeschaltet wird, wenn die Spannung der Stromquelle für eine vorgegebene Zeit einen vorgegebenen Ausschaltwert unterschreitet. Eine Anschaltung der Schutzeinrichtungen an das Stromnetz erfolgt somit nur dann, wenn die Stromquelle auch genug elektrische Energie zur Einspeisung liefert.

Vorteilhaft ist es, wenn als Ausschaltwert ein unterer Spannungswert vorgegeben wird, ab dem die Stromquelle den Energieverbrauch der Mittel zur Einspeisung und der Schutzeinrichtungen nicht mehr deckt.

Für den Einschaltwert ist es vorteilhaft, wenn ein Spannungswert vorgegeben wird, der größer als der Ausschaltwert ist.

Die Einspeisung von elektrischer Energie in das Stromnetz ist erst dann gegeben, wenn die von der Stromquelle gelieferte Energie über dem Eigenverbrauch aller Mittel, die zur Einspeisung vorhanden sind, liegt. Die Mittel umfassen dabei in der Regel einen Wechselrichter, Hilfsversorgungen, diverse Anzeigen und die Schutzeinrichtungen.

Die angegebene Festlegung des Einschaltwertes und des Ausschaltwertes bewirkt, dass die Schutzeinrichtungen und die Hilfsversorgungen nur dann an das Stromnetz angeschaltet sind, wenn die Stromquelle genügend Energie zur Einspeisung in das Stromnetz abgibt. Der Einschaltwert wird dabei größer als der Ausschaltwert gewählt, um ein andauerndes Ein- und Ausschalten zu vermeiden, wenn die Spannung über längere Zeit hinweg im Bereich dieser Werte schwankt.

Die Erfindung wird nachfolgend in beispielhafter Weise unter Bezugnahme auf die beigefügte Figur erläutert. Es zeigt in schematischer Darstellung:

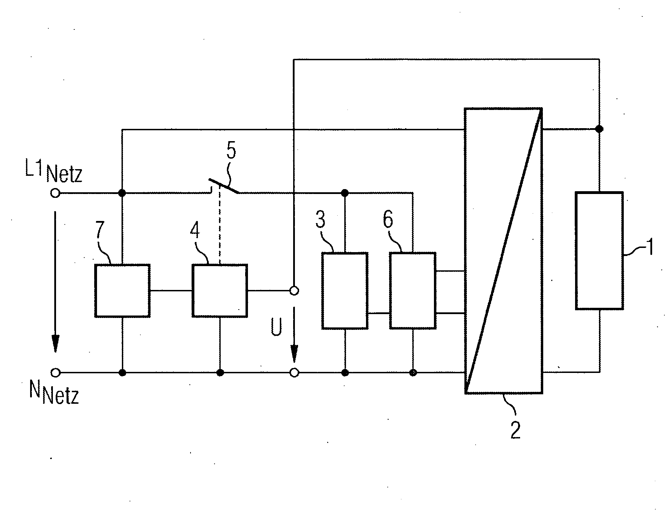

Fig. 1: Anordnung der erfindungsgemäßen Vorrichtung

In Figur 1 ist eine Stromquelle 1 dargestellt, die über einen Wechselrichter 2 elektrische Energie in eine Stromnetz L1_{Netz}, N_{Netz} liefert. Die Mittel zur Einspeisung umfassen neben dem Wechselrichter 2 auch eine Stromversorgung 6 zur Versorgung der Steuerung der Schaltelemente im Wechselrichter 2. Die Stromversorgung 6 ist dabei über einen Schalter 5 an das Stromnetz L1_{Netz}, N_{Netz} angeschlossen. Ebenso sind Schutzeinrichtungen 3 über den Schalter 5 an das Stromnetz L1_{Netz}, N_{Netz} angeschlossen und mit dem Wechselrichter 2 verbunden. Die Schutzeinrichtungen 3 messen laufend die Netzspannung, Frequenz und Impedanz und dienen neben der Netzüberwachung der synchronen Einspeisung.

Ein- und Ausgeschaltet wird der Schalter 5 mittels einer Steuerung 4, die über eine eigene Stromversorgung 7 an das Stromnetz angeschaltet ist. Die Steuerung 4 ist auch mit der Stromquelle 1 verbunden und misst laufend die Spannung U, die am Ausgang der Stromquelle 1 anliegt.

Die Stromquelle kann beispielsweise ein Solarpaneel mit einer Nennspannung von 500V sein. Mit zunehmender Sonneneinstrahlung auf das Solarpaneel ist dann für die Spannung U der Stromquelle 1 ein Schwellwert bestimmbar, ab dem die vom Solarpaneel gelieferte Energie den Eigenverbrauch der vorhandenen Mittel zur Einspeisung und der Schutzeinrichtungen 3 übersteigt.

Beträgt dieser Schwellwert zum Beispiel ungefähr 150V, dann wird die Steuerung günstigerweise so eingestellt, dass der Schalter 5 ausschaltet, wenn die Spannung U des Solarpaneels 1 für 30s einen Wert von 150V unterschreitet. Der Schalter 5 wird eingeschaltet, wenn die Spannung U des Solarpaneels 1 für 30s einen Wert von 170V überschreitet. Eine Differenz zwischen Einschalt- und Ausschalt-Spannungswert (z.B. 20V) und eine vorgegebene Unterschreitungs- bzw. Überschreitungszeit (z.B. 30s) sind notwendig, um bei Betriebsbedingungen im Bereich dieser Spannungswerte ein andauerndes Ein- und Ausschalten zu vermeiden. Das kann z.B. bei vorbeiziehenden Wolken mit schwankender Sonneneinstrahlung der Fall sein.

## Patentansprüche

1. Vorrichtung zur dezentralen Energieversorgung, welche Mittel zur Einspeisung von elektrischer Energie einer insbesondere regenerativen Stromquelle (1) in ein Stromnetz (L1_{Netz}, N_{Netz}) und Schutzeinrichtungen (3) umfasst, wobei die Stromquelle (1) mit einer Steuerung (4) verbunden ist, mittels welcher die Anschaltung zumindest eines Teils der Schutzeinrichtungen (3) an das Stromnetz (L1_{Netz}, N_{Netz}) erfolgt , **dadurch gekennzeichnet, dass** die Anschaltung der Schutzeinrichtungen (3) an das Stromnetz (L1_{Netz}, N_{Netz}) abhängig von der aus der Stromquelle (1) zur Verfügung stehenden Energie nur dann erfolgt, wenn die Stromquelle (1) auch genug elektrische Energie zur Einspeisung liefert.

2. Vorrichtung nach Anspruch 1, **dadurch gekennzeichet, dass** die Mittel zur Einspeisung zumindest eine Hilfsversorgung (6) umfassen, die mittels der Steuerung (4) an das Stromnetz (L1_{Netz}, N_{Netz}) angeschaltet ist.

3. Vorrichtung nach Anspruch 2, **dadurch gekennzeichnet, dass** die Anschaltung der Hilfsversorgung (6) an das Stromnetz (L1_{Netz}, N_{Netz}) abhängig von der aus der Stromquelle (1) zur Verfügung stehenden Energie nur dann erfolgt, wenn die Stromquelle (1) auch genug elektrische Energie zur Einspeisung liefert.

4. Vorrichtung nach einem der Ansprüche 1 bis 3, **dadurch gekennzeichet, dass** die Stromquelle (1) ein photovoltaisches Element ist.

5. Vorrichtung nach einem der Ansprüche 1 bis 4, **dadurch gekennzeichnet, dass** die Anschaltung der Schutzeinrichtungen (3) bzw. der Hilfsversorgung (6) an das Stromnetz (L1_{Netz}, N_{Netz}) mittels eines Schalters (5) erfolgt, der als mechanischer Kontakt ausgebildet ist.

6. Vorrichtung nach einem der Ansprüche 1 bis 4, **dadurch gekennzeichnet, dass** die Anschaltung der Schutzeinrichtungen (3) bzw. der Hilfsversorgung (6) an das Stromnetz (L1_{Netz}, N_{Netz}) mittels eines Schalters (5) erfolgt, der als Halbleiterelement ausgebildet ist.

7. Verfahren zum Betreiben einer Vorrichtung nach einem der Ansprüche 1 bis 6, **dadurch gekennzeichnet, dass** der Schalter (5) eingeschaltet wird, wenn die Spannung (U) der Stromquelle (1) für eine vorgegebene Zeit einen vorgegebenen Einschaltwert überschreitet und dass der Schalter (5) ausgeschaltet wird, wenn die Spannung (U) der Stromquelle (1) für eine vorgegebene Zeit einen vorgegebenen Ausschaltwert unterschreitet.

8. Verfahren nach Anspruch 7, **dadurch gekennzeichnet, dass** als Ausschaltwert ein unterer Spannungswert vorgegeben wird, ab dem die Stromquelle (1) den Energieverbrauch der Mittel zur Einspeisung und der Schutzeinrichtungen (3) nicht mehr deckt.

9. Verfahren nach Anspruch 8, **dadurch gekennzeichnet, dass** als Einschaltwert ein Spannungswert vorgegeben wird, der größer als der Ausschaltwert ist.

## Claims

1. Device for supplying energy on a decentralised basis, said device comprising means for feeding electrical energy from an in particular regenerative power source (1) into a power grid (L1_{grid}, N_{grid}) and protective devices (3), wherein the power source (1) is connected to a controller (4) by means of which at least some of the protective devices (3) are connected to the power grid (L1_{grid}, N_{grid}), **characterised in that** the protective devices (3) are connected to the power grid (L1_{grid}, N_{grid}) as a function of the energy available from the power source (1) only if the power source (1) also supplies sufficient electrical energy for feeding into the grid.

2. Device according to claim 1, **characterised in that** the means for feeding in energy comprise at least one auxiliary supply (6) which is connected to the power grid (L1_{grid}, N_{grid}) by means of the controller (4).

3. Device according to claim 2, **characterised in that** the auxiliary supply (6) is connected to the power grid (L1_{grid}, N_{grid}) as a function of the energy available from the power source (1) only if the power source (1) also supplies sufficient electrical energy for feeding into the grid.

4. Device according to one of claims 1 to 3, **characterised in that** the power source (1) is a photovoltaic element.

5. Device according to one of claims 1 to 4, **characterised in that** the protective devices (3) and the auxiliary supply (6) are connected to the power grid (L1_{gridf} N_{grid}) by means of a switch (5) which is embodied as a mechanical contact.

6. Device according to one of claims 1 to 4, **characterised in that** the protective devices (3) and the auxiliary supply (6) are connected to the power grid (L1_{grid}, N_{grid}) by means of a switch (5) which is embodied as a semiconductor element.

7. Method for operating a device according to one of claims 1 to 6, **characterised in that** the switch (5) is turned on if the voltage (U) of the power source (1) exceeds a predefined turn-on value for a predefined period of time and that the switch (5) is turned off if the voltage (U) of the power source (1) falls below a predefined turn-off value for a predefined period of time.

8. Method according to claim 7, **characterised in that** a lower voltage value is predefined as the turn-off value as of which the power source (1) no longer covers the energy consumption of the means for feeding in energy and of the protective devices (3).

9. Method according to claim 8, **characterised in that** a voltage value is predefined as the turn-on value, which voltage value is greater than the turn-off value.

## Revendications

1. Installation d'alimentation décentralisée en énergie, qui comprend des moyens pour injecter de l'énergie électrique d'une source ( 1 ) de courant, notamment régénérative, dans un réseau ( L_{1Netz}, N_{Netz} ) de courant et des dispositifs ( 3 ) de protection, la source ( 1 ) de courant étant reliée à une commande ( 4 ) au moyen de laquelle s'effectue la connexion d'au moins une partie des dispositifs ( 3 ) de protection au réseau ( L_{1Netz}, N_{Netz} ) de courant, **caractérisée en ce que** la connexion des dispositifs ( 3 ) de protection au réseau ( L_{1Netz}, N_{Netz} ) de courant s'effectue en fonction de l'énergie mise à disposition par la source ( 1 ) de courant seulement lorsque la source ( 1 ) de courant fournit aussi suffisamment d'énergie électrique pour l'injection.

2. Installation suivant la revendication 1, **caractérisée en ce que** les moyens d'injection comprennent au moins une alimentation ( 6 ) auxiliaire qui est connectée au réseau ( L_{1Netz}, N_{Netz} ) de courant au moyen de la commande ( 4 ).

3. Installation suivant la revendication 2, **caractérisée en ce que** la connexion de l'alimentation ( 6 ) auxiliaire au réseau ( L_{1Netz}, N_{Netz} ) de courant s'effectue en fonction de l'énergie mise à disposition par la source ( 1 ) de courant seulement lorsque la source ( 1 ) de courant fournit aussi suffisamment d'énergie électrique pour l'injection.

4. Installation suivant l'une des revendications 1 à 3, **caractérisée en ce que** la source ( 1 ) de courant est un élément photovoltaïque.

5. Installation suivant l'une des revendications 1 à 4, **caractérisée en ce que** la connexion des dispositifs ( 3 ) de protection ou de l'alimentation ( 6 ) auxiliaire au réseau ( L_{1Netz}, N_{Netz} ) de courant s'effectue au moyen d'un interrupteur ( 5 ) qui est constitué sous la forme d'un contact mécanique.

6. Installation suivant l'une des revendications 1 à 4, **caractérisée en ce que** la connexion des dispositifs ( 3 ) de protection ou de l'alimentation ( 6 ) auxiliaire au réseau ( L_{1Netz}, N_{Netz} ) de courant s'effectue au moyen d'un interrupteur ( 5 ) qui est constitué en élément à semiconducteur.

7. Procédé pour faire fonctionner une installation suivant l'une des revendications 1 à 6, **caractérisé en ce que** l'interrupteur ( 5 ) est fermé lorsque la tension ( U ) de la source ( 1 ) de courant dépasse une valeur de fermeture prescrite pendant une durée prescrite et **en ce que** l'interrupteur ( 5 ) est ouvert lorsque la tension ( U ) de la source ( 1 ) de courant est inférieure à une valeur d'ouverture prescrite pendant une durée prescrite.

8. Procédé suivant la revendication 7, **caractérisé en ce que** l'on prescrit comme valeur d'ouverture une valeur basse de la tension à partir de laquelle la source ( 1 ) de courant ne couvre plus la consommation d'énergie des moyens d'injection et des dispositifs ( 3 ) de protection.

9. Procédé suivant la revendication 8, **caractérisé en ce que** l'on prescrit comme valeur de fermeture une valeur de tension qui est plus grande que la valeur d'ouverture.
